# EUROPEAN PATENT APPLICATION

(11) **EP 2 202 017 A1**
(43) Date of publication of application: **30.06.2010**
(21) Application number: 09174591.9
(22) Date of filing: 30.10.2009
(51) Int. Cl.: B22F 9/04, C22C 1/04, C22C 27/04

(54) **Method of producing nitride/tungsten nanocomposite powder and nitride/tungsten nanocomposite powder produced using the same**

(30) Priority: 22.12.2008 KR 20080131345
(71) Applicant: Korea Advanced Institute of Science and Technology, 305-701 Daejeon (KR)
(72) Inventor: Hong, Soonhyung, Daejeon 305-701 (KR); Lee, Kyongho, 305-701, Daejeon (KR); Shin, Yoochul, 305-701, Daejeon (KR); Lee, Dongju, 305-701, Daejeon (KR)
(74) Representative: Winter, Brandl, Fürniss, Hübner, Röss, Kaiser, Polte - Partnerschaft

(57) **Abstract**

Provided is a method of producing a nitride/tungsten nanocomposite powder. The method includes mixing nitride with tungsten or a tungsten alloy, and mechanically alloying the mixture in an inert atmosphere using a milling machine.

## Description

### TECHNICAL FIELD

The described technology relates generally to a method of producing a nitride/tungsten nanocomposite powder in which nitride is uniformly dispersed in tungsten, and a nitride/tungsten nanocomposite powder produced using the method.

### BACKGROUND

Tungsten is a heat-resistant metal having a high melting point. Due to a low thermal expansion coefficient and excellent high-temperature mechanical properties, tungsten is widely used in various industrial fields. However, the strength of tungsten steeply decreases at a high temperature of 1000 °C or more. For example, the strength of tungsten at 1000 °C decreases to 60 to 80% of the strength of tungsten at room temperature.

To overcome such a disadvantage of tungsten, a variety of attempts are being made. For example, to improve the mechanical properties of tungsten and tungsten alloys, fireproof carbide or oxide such as TiC, ZrC, HfC, or ZrO₂, which are stable at high temperature, may be used as a dispersing agent. The carbide, etc., dispersed along a grain boundary of tungsten strengthens the grain boundary or hinders the grain boundary from moving at high temperature. Tungsten and tungsten composites whose above-mentioned disadvantage is overcome have a high melting point, high thermal shock resistivity, excellent ablation resistivity, etc., and can be widely used in high-temperature environments. Thus, research for improving the mechanical properties of tungsten and tungsten composites is required.

### SUMMARY

Embodiments provide a method of producing a nitride/tungsten nanocomposite powder in which nitride is uniformly dispersed in tungsten to improve mechanical properties of tungsten and a nitride/tungsten nanocomposite powder produced using the method.

In one embodiment, a method of producing a nitride/tungsten nanocomposite powder is provided. The method includes: mixing nitride with tungsten or a tungsten alloy; and alloying the mixture in an inert atmosphere using a milling machine.

The Summary is provided to introduce a selection of concepts in a simplified form that are further described below in the Detailed Description. The Summary is not intended to identify key features or essential features of the claimed subject matter, nor is it intended to be used as an aid in determining the scope of the claimed subject matter.

### BRIEF DESCRIPTION OF THE DRAWINGS

The above and other features and advantages of the present disclosure will become more apparent to those of ordinary skill in the art by describing in detail example embodiments thereof with reference to the attached drawings in which:

FIG. 1 is a scanning electron microscope (SEM) view showing the structure of a nitride/tungsten composite powder produced according to conventional art;

FIG. 2 is a schematic cross-sectional view of a milling machine according to an embodiment of the present disclosure;

FIG. 3 shows X-ray diffraction (XRD) results of a nitride/tungsten nanocomposite powder produced according to First embodiment;

FIG. 4 shows results of measuring the tungsten crystallite size of the nitride/tungsten nanocomposite powder produced according to First embodiment;

FIG. 5 is a transmission electron microscopy (TEM) photograph showing the structure of the nitride/tungsten nanocomposite powder produced according to First embodiment;

FIG. 6A shows SEM photographs of a nitride/tungsten nanocomposite powder obtained by performing a milling operation for six hours according to Third embodiment, and FIG. 6B shows SEM photographs of a nitride/tungsten nanocomposite powder obtained by performing the milling operation for ten hours; and

FIGS. 7A and 7B show SEM photographs of a nitride/tungsten mixture mixed according to the conventional method of First comparative embodiment.

### DETAILED DESCRIPTION

It will be readily understood that the components of the present disclosure, as generally described and illustrated in the Figures herein, could be arranged and designed in a wide variety of different configurations. Thus, the following more detailed description of the embodiments of apparatus and methods in accordance with the present disclosure, as represented in the Figures, is not intended to limit the scope of the disclosure, as claimed, but is merely representative of certain examples of embodiments in accordance with the disclosure. The presently described embodiments will be understood by reference to the drawings, wherein like parts are designated by like numerals throughout. Moreover, the drawings are not necessarily to scale, and the size and relative sizes of layers and regions may have been exaggerated for clarity.

The present disclosure provides a method of producing a nitride/tungsten composite powder. The inventors of the present disclosure have found that a nitride/tungsten composite formed by dispersing nitride in a tungsten base can improve the strength of tungsten at high temperature. For example, it has been found that metal nitride having a similar melting point to tungsten whose melting point is about 3410 °C, can maintain a stable state at a high temperature of about 1000 °C or more, effectively hinders tungsten grains from moving when the metal nitride is dispersed in a tungsten base, and improves the strength of tungsten at high temperature. The present disclosure provides a method of producing a nitride/tungsten nanocomposite powder that can be applied to producing the above-mentioned nitride/tungsten nanocomposite. In a nitride/tungsten nanocomposite powder produced according to embodiments of the present disclosure, nitride nanoparticles may be uniformly dispersed in the tungsten grains or at tungsten grain boundaries. Thus, a nitride/tungsten nanocomposite having improved strength at high temperature can be obtained using a known sintering process. In this specification and claims, a nitride/tungsten nanocomposite powder denotes a nanocomposite powder including nitride and tungsten, and is not limited to a nanocomposite consisting of nitride and tungsten. For example, a nanocomposite powder including a nitride/tungsten alloy may be referred to as a nitride/tungsten nanocomposite powder.

The method of producing a nitride/tungsten nanocomposite powder includes mixing nitride with tungsten or a tungsten alloy, and alloying the mixture in an inert atmosphere using a milling machine. The nitride may include ZrN, HfN, BN, AIN, Si₃N₄, TiN, TaN, Ta₂N, VN, CrN, Cr₂N, Mo₂N, NbN, WN, or W₂N. However, the nitride is not limited thereto, and may be any non-metal compound that is generated by reaction between a metal element in the periodic table and nitrogen and has high-temperature properties such as thermal stability at a temperature of about 1000 °C.

The tungsten alloy may include at least one element of Nb, Tc, Ru, Hf, Os, Mo, Ta, Re and Ir. For example, the tungsten alloy may be a tungsten-niobium (W-Nb) alloy, a tungsten-technetium (W-Tc) alloy, a tungsten-ruthenium (W-Ru) alloy, a tungsten-hafnium (W-Hf) alloy, a tungsten-osmium (W-Os) alloy, a tungstenmolybdenum (W-Mo) alloy, a tungsten-tantalum (W-Ta) alloy, a tungsten-rhenium (W-Re) alloy, a tungsten-iridium (W-Ir) alloy, or a tungsten-molybdenum-tantalumrhenium-iridium (W-Mo-Ta-Re-Ir) alloy. However, the tungsten alloy is not limited thereto, and may be any alloy containing tungsten.

The nitride and the tungsten may be mixed at a volume ratio (%) of 0.1 to 95:5 to 99.9. In another embodiment, the nitride and the tungsten may be mixed at a volume ratio (%) of 1 to 50:50 to 99. In some embodiments, the nitride and the tungsten alloy may be mixed at substantially the same volume ratio as those of the nitride and the tungsten.

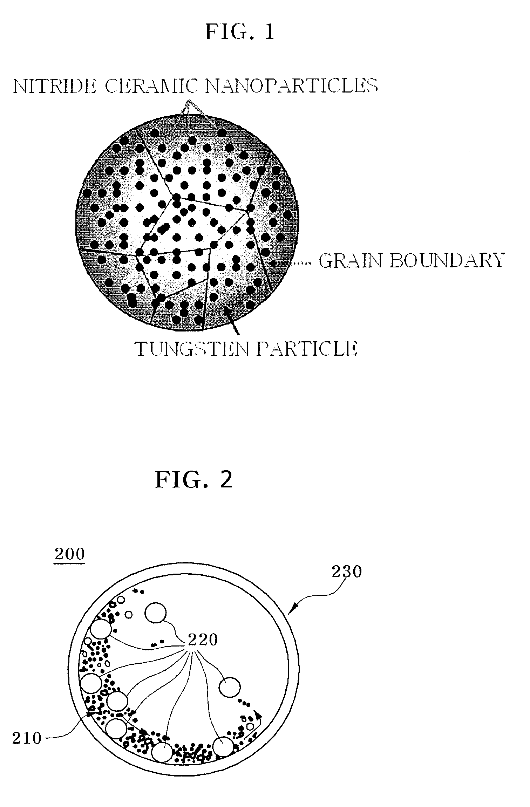

Alloying the mixture of the nitride with the tungsten or tungsten alloy using a milling machine may be performed in an inert atmosphere. The inert atmosphere may be a vacuum, nitrogen gas, or argon gas atmosphere. To prevent tungsten from being oxidized, the nitride/tungsten nanocomposite powder is produced in the inert atmosphere. Tungsten, which is a polycrystalline material, includes grains that are small crystals of microscopic size, and has grain boundaries that are interfaces between the grains. In the inert atmosphere, the nitride may be uniformly dispersed in the grains of tungsten or at the grain boundaries. The conceptual diagram of such a nitride/tungsten nanocomposite powder is shown in FIG. 1. In the similar manner, in the inert atmosphere, the nitride may also be uniformly dispersed in grains or grain boundaries of the tungsten alloy.

The milling machine may be a planetary ball mill, an attritor, a stirred ball mill, a vibration mill, and so on. In one embodiment of the present disclosure, the milling machine mills the mixture of the nitride with the tungsten or tungsten alloy, and mechanical alloying (MA) of the nitride and the tungsten occurs during the milling process. Here, MA of the nitride and the tungsten denotes a process of mechanically milling nitride and tungsten or nitride and a tungsten alloy to produce an alloy powder having crystalline structures of nanoscale size. To enable such MA, the milling machine may be a high-energy milling machine that can perform a high-speed milling operation using high-strength balls. The high-strength balls may be made of, for example, ZrO₂, Y₂O₃, Al₂O₃, WC-Co, high-strength steels (HSS), etc. In one embodiment, the mixture of the nitride with the tungsten or tungsten alloy may be provided in the form of a powder, and the alloy powder produced by MA may be a nanocomposite powder in which nitride nanoparticles are uniformly dispersed in tungsten grains or at tungsten grain boundaries or a nanocomposite powder in which nitride nanoparticles are uniformly dispersed in the grains or at the grain boundaries of the tungsten alloy.

FIG. 2 is a schematic cross-sectional view of an illustrative embodiment of a milling machine. Referring to FIG. 2, a milling machine 200 may include a powder 210 to be milled, balls 220 colliding with the powder 210, and a jar 230 containing the powder 210 and the balls 220.

The milling machine 200 mills the powder 210 by ball-to-ball or ball-to-jar collision. When the ball-to-jar collision is used, a ball filling ratio in the jar 230 that is a volume ratio(%) of the jar 230 to the ball 220 may be set to 1 to 20:1. In one embodiment of the present disclosure, a mixture of the nitride with the tungsten or tungsten alloy is used as the powder 210.

In the milling machine 200, the weight ratio (%) of the mixture of the nitride with the tungsten or the mixture of the nitride with tungsten alloy to the balls 220 may be 1:1 to 50. The milling machine 200 performs a rotary or back-and-forth motion at a milling speed of 1 to 5000 rpm and mills the mixture, thereby performing MA. As a result, a nanocomposite powder of nitride/tungsten or nitride/tungsten alloy may be generated.

Embodiments of the present disclosure and Comparative embodiment will be described in detail below. Embodiments and Comparative embodiment regarding a nitride/tungsten nanocomposite powder are suggested to aid in understanding the present disclosure, and those of ordinary skill in the art will readily appreciate that many modifications are possible in the embodiments within the technological scope of the present disclosure. For example, those of ordinary skill in the art can produce a nanocomposite powder by mechanically alloying a nitride/tungsten alloy. Therefore, it is to be understood that the appended claims are not limited by Embodiments and Comparative embodiment.

<First embodiment> : Alloying of nitride and tungsten

To produce a nitride/tungsten nanocomposite powder, a ZrN powder having a purity of 99.9% and a particle size of 2 µm and a W powder having a purity of 99.9% and a particle size of 2.5 µm were prepared. A mixture powder was obtained by mixing the ZrN powder with the W powder at a volume ratio of 50:50.

After this, MA was performed using a planetary ball mill. In the planetary ball mill, zirconia (ZrO₂) balls and a jar having a capacity of 600 cc were used. Also, the ball filling ratio (%), that is the volume ratio of the jar to the balls, was 15:1. Under these conditions, the prepared mixture powder was inserted into the planetary ball mill so that the weight ratio of the mixture powder to the balls could be 1:10. The milling speed was set to 250 rpm, and the milling operation was performed for ten hours.

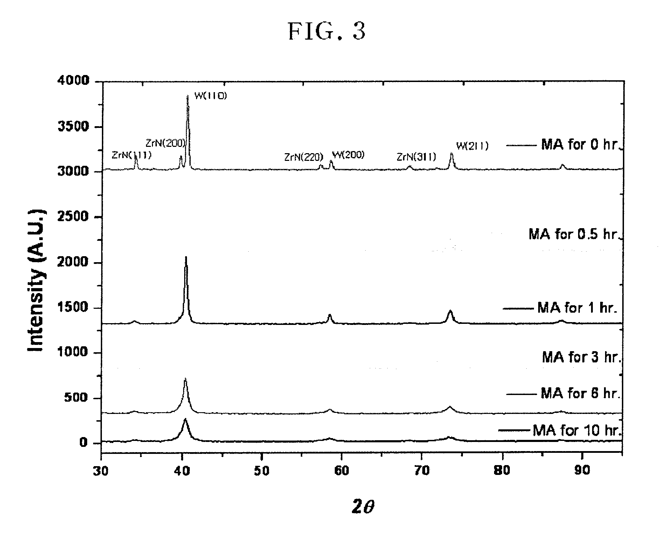

X-ray diffraction (XRD) analysis was performed to examine whether a material obtained through the process had been completely alloyed, and the XRD analysis results of the present embodiment are shown in FIG. 3. In FIG. 3, MA was not performed at all before the milling machine was used (MA for 0 hr), and thus peaks indicating ZrN and W elements are clearly distinguished from each other. However, as a milling time increased, the intensities of the ZrN and W peaks were reduced. When the milling operation was performed for ten hours (MA for 10 hr), the intensities of the peaks were remarkably reduced. In other words, it can be seen from the XRD results that ZrN and W were not just simply mixed but mechanically alloyed to be a nitride/tungsten nanocomposite powder.

<Second embodiment> : Dispersion scale of nitride/tungsten nanocomposite powder

To examine whether the nitride/tungsten nanocomposite powder produced in First embodiment had a nanoscale size, the size of tungsten grains was measured by the Scherrer formula using the XRD results. When the size of tungsten grains was reduced through the MA process, the dispersion scale of the nitride/tungsten nanocomposite powder was also reduced as much as the size of tungsten grains. To determine whether the dispersion scale of the nitride/tungsten nanocomposite powder was reduced, the size of tungsten grains was measured.

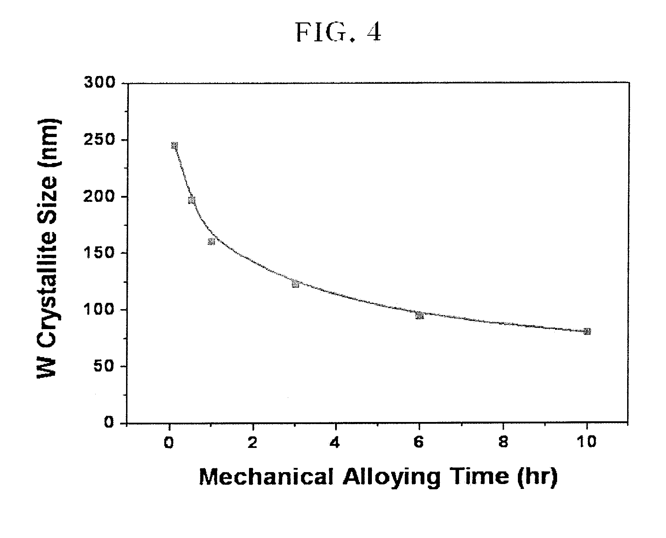

FIG. 4 shows results of measuring the size of tungsten grains according to mechanical alloying time in the nitride/tungsten nanocomposite powder of FIG. 3. Referring to FIG. 4, MA was not performed at all before the nitride/tungsten mixture was milled using the milling machine (Mechanical Alloying Time: 0 hr), and thus the size of tungsten grains was 250 nm. However, as a milling time increased, the size was reduced. When the milling operation was performed for ten hours (Mechanical Alloying Time: 10 hr), the size of tungsten grains was 100 nm. In other words, it can be seen from the results that the dispersion scale of the nitride/tungsten nanocomposite powder is about 100 nm.

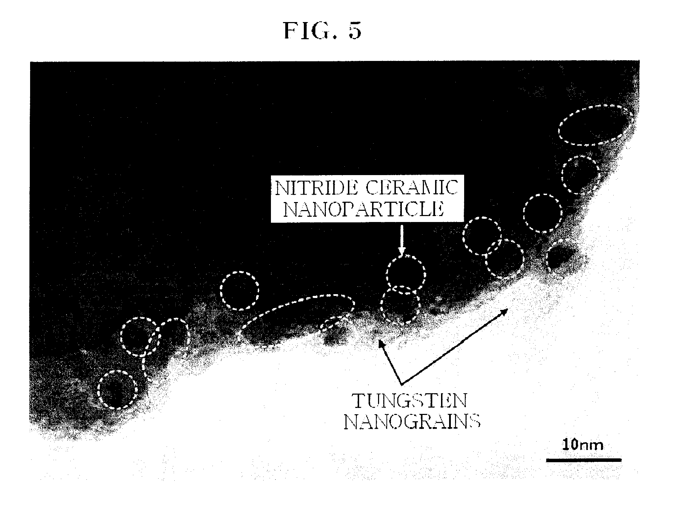

Also, to examine the sizes of nitride particles and tungsten grains of the nitride/tungsten nanocomposite powder, the photograph of the structure was obtained using a transmission electron microscopy (TEM). The structure photograph is shown in FIG. 5, in which it is possible to see that the nitride/tungsten nanocomposite powder has a microstructure including nitride ceramic nanoparticles of several to tens of nanometers and tungsten grains of tens to hundreds of nanometers.

<Third embodiment> : Degree of dispersion of nitride/tungsten nanocomposite powder

Since the nitride/tungsten nanocomposite powder of the present disclosure is intended to uniformly disperse nitride in tungsten, the degree of dispersion of the nitride/tungsten nanocomposite powder produced in First embodiment was confirmed using a scanning electron microscope (SEM).

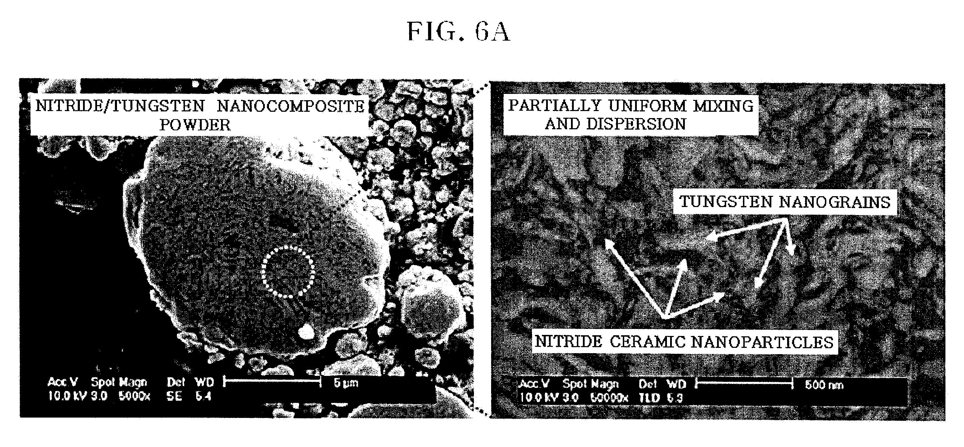

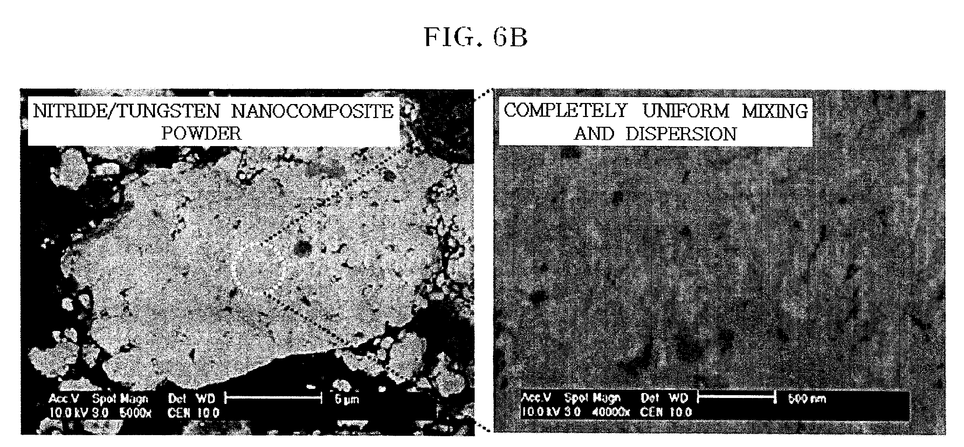

The degree of dispersion varies according to a milling time. Thus, SEM photographs of nitride/tungsten nanocomposite powders obtained by performing the milling operation for six hours are shown in FIG. 6A, and SEM photographs of nitride/tungsten nanocomposite powders obtained by performing the milling operation for ten hours are shown in FIG. 6B. Each of FIGS. 6A and 6B includes two photographs. The right one of the two photographs is an enlarged view of the left one obtained by analyzing the left one in a backscattered electron (BSE) mode.

Referring to the enlarged view of FIG. 6A (that is, the right one of the two photographs of FIG. 6A), nitride ceramic nanoparticles (black portion) are partially mixed with and dispersed in tungsten nanograins (white portion), but, referring to the enlarged view of FIG. 6B (that is, the right one of the two photographs of FIG. 6B), nitride ceramic nanoparticles (black portion) are uniformly mixed with and dispersed in tungsten nanograins (white portion). In other words, it can be confirmed in the enlarged view of FIG. 6B that in the nitride/tungsten nanocomposite powder obtained by performing the milling operation for ten hours, nitride ceramic nanoparticles are mixed with and dispersed in tungsten nanograins at a nanoscale of 100 nm or less so that the colors of the nitride ceramic nanoparticles and the tungsten nanograins cannot be distinguished.

<First comparative embodiment> : Degree of dispersion

To confirm how uniformly nitride ceramic particles were dispersed in tungsten particles in a nitride/tungsten nanocomposite powder produced by the method according to the present disclosure, the nitride/tungsten nanocomposite powder was compared with a nitride/tungsten mixture mixed according to a conventional method.

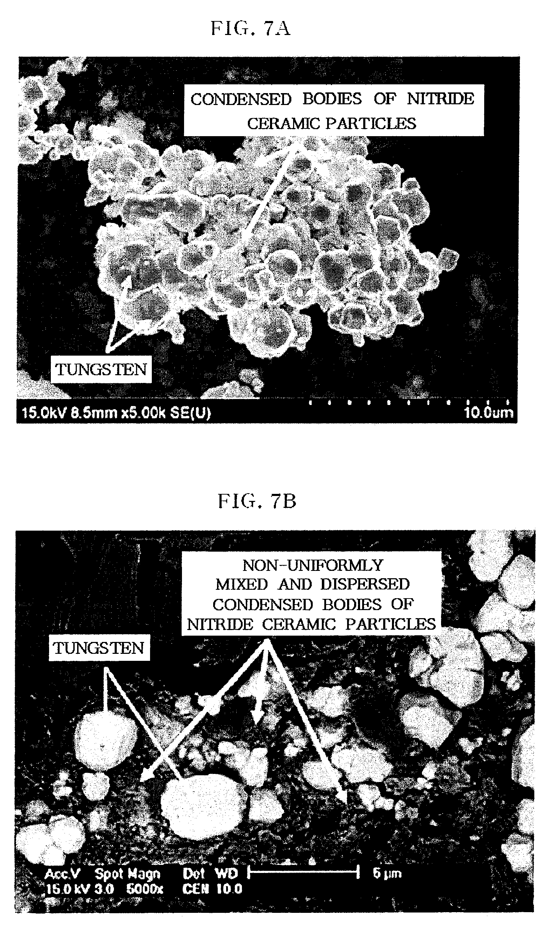

First, the nitride/tungsten mixture was prepared by the conventional method. In the conventional method, a nitride powder and a tungsten powder are simply mixed to produce a nitride/tungsten mixture without a MA process. SEM photographs showing the structure of the nitride/tungsten mixture are shown in FIGS. 7A and 7B. In FIG. 7A, nitride ceramic particles condensed on the surface of tungsten are shown. Also, in FIG. 7B, cross-sections of condensed bodies of nitride ceramic particles non-uniformly mixed with and dispersed in tungsten are shown.

On the other hand, the nitride/tungsten nanocomposite powder according to the present disclosure is shown in FIGS. 5, 6A, and 6B. By comparing the results, it is possible to see that nitride is remarkably uniformly dispersed in tungsten in the nitride/tungsten nanocomposite powder produced by the method according to the present disclosure in comparison with the conventional nitride/tungsten mixture.

As described above, using a method according to the present disclosure, it is possible to produce a nitride/tungsten nanocomposite powder in which nitride is uniformly dispersed in tungsten. The nitride/tungsten nanocomposite powder that may be applied to a nitride/tungsten composite material is expected to have excellent thermal shock resistivity, strength, and ablation resistivity at high temperature, and can be used in various fields such as parts used in the propulsion engines of airplanes or rockets.

The foregoing is illustrative of the present disclosure and is not to be construed as limiting thereof. Although numerous embodiments of the present disclosure have been described, those skilled in the art will readily appreciate that many modifications are possible in the embodiments without materially departing from the novel teachings and advantages of the present disclosure. Accordingly, all such modifications are intended to be included within the scope of the present disclosure as defined in the claims. Therefore, it is to be understood that the foregoing is illustrative of the present disclosure and is not to be construed as limited to the specific embodiments disclosed, and that modifications to the disclosed embodiments, as well as other embodiments, are intended to be included within the scope of the appended claims. The present disclosure is defined by the following claims, with equivalents of the claims to be included therein.

## Claims

1. A method of producing a nitride/tungsten nanocomposite powder, comprising:
mixing nitride with tungsten or a tungsten alloy; and
mechanically alloying the mixture in an inert atmosphere using a milling machine.

2. The method according to claim 1, wherein the nitride comprises at least one selected from the group consisting of ZrN, HfN, BN, AlN, Si₃N₄, TiN, TaN, Ta₂N, VN, CrN, Cr₂N, Mo₂N, NbN, WN, and W₂N.

3. The method according to claim 1, wherein the tungsten alloy comprises at least one element selected from the group consisting of Nb, Tc, Ru, Hf, Os, Mo, Ta, Re and Ir, and tungsten.

4. The method according to claim 1, wherein the nitride and the tungsten are mixed at a volume ratio (%) of 0.1 to 95:5 to 99.9.

5. The method according to claim 1, wherein the nitride and the tungsten alloy are mixed at a volume ration (%)of 0.1 to 95:5 to 99.9.

6. The method according to claim 1, wherein the inert atmosphere comprises at least one selected from the group consisting of vacuum, nitrogen gas, and argon gas.

7. The method according to claim 1, wherein the milling machine comprises any one selected from the group consisting of a planetary ball mill, an attritor, a stirred ball mill, and a vibration mill.

8. The method according to claim 1, wherein the milling machine uses ball-to-ball or ball-to-jar collision.

9. The method according to claim 1, wherein a weight ratio (%) of the mixture to balls of the milling machine is 1:1 to 50.

10. The method according to claim 1, wherein a milling speed of the milling machine is 1 to 5000 rpm.

11. The method according to claim 1, wherein mechanically alloying the mixture comprises mechanically milling the mixture and producing a nanocomposite powder in which nitride nanoparticles are uniformly dispersed at grain boundaries of the tungsten, or in grains of the tungsten.

12. The method according to claim 1, wherein mechanically alloying the mixture comprises mechanically milling the mixture and producing a nanocomposite powder in which nitride nanoparticles are uniformly dispersed at grain boundaries of the tungsten alloy, or in grains of the tungsten alloy

13. A nitride/tungsten nanocomposite powder produced by the method according to claim 1.

14. The nitride/tungsten nanocomposite powder according to claim 13, wherein nitride nanoparticles are uniformly dispersed at grain boundaries of tungsten or a tungsten alloy, or in grains of the tungsten or tungsten alloy.
